# EUROPEAN PATENT APPLICATION

(11) **EP 3 006 711 A1**
(43) Date of publication of application: **13.04.2016**
(21) Application number: 14807471.9
(22) Date of filing: 23.04.2014
(51) Int. Cl.: F02F 3/00, F16J 1/16

(54) **INTERNAL-COMBUSTION-ENGINE PISTON AND PIN-HOLE-FORMING METHOD THEREFOR**

(30) Priority: 03.06.2013 JP 2013117273
(71) Applicant: Mahle Engine Components Japan Corporation, Saitama 363-0002 (JP); Fuji Manufacturing Co., Ltd., Tokyo 132-0025 (JP)
(72) Inventor: OIWA Chikara, Okegawa-shi Saitama 363-0002 (JP); IMAI Akihiro, Okegawa-shi Saitama 363-0002 (JP); OSAWA Katsuyuki, Okegawa-shi Saitama 363-0002 (JP); ISHIWATA Masato, Tokyo 132-0025 (JP)
(74) Representative: D Young & Co LLP
(86) International application number: PCT/JP2014/061478
(87) International publication number: WO 2014/196282

(57) **Abstract**

A piston of this invention is cast from aluminum silicon alloy, a piston center side portion and the piston peripheral side portion of the pin bore 20 formed on the pin boss 18 are formed with the tapers 27, 28, and recesses 33 are formed on the inner surface of the pin bore 20 excepting the area near the engaging ring grooves 24, through the dimple process, and the first phase silicon crystal in the piston matrix is minimized by the dimple process and the inner surface of the pin bore 20 is reinforced by the minimized layer.

## Description

### FIELD OF THE INVENTION

This invention relates to a piston for internal combustion engine and a method for working pin bore of the piston, and more particularly to a piston connected with the connecting rod through a piston pin and the piston have pin boss through which pin bore is formed for receiving the piston pin, and the working process of the pin bore.

In the internal combustion engine, a piston receives gas expansion pressure by the combustion in the cylinder, and is transmitted to a crank of a crank shaft through a connecting rod which is connected to the piston through the piston pin. By this arrangement, the linear motion of the piston is transferred to the revolving movement of the crank shaft, and the engine generates output power. In this movement, the piston center side portion near a combustion chamber of the inner surface of the pin bore of the pin boss of the piston received a large mechanical load. When the output of the engine is enhanced and the dimension of the engine is minimized, still more load is applied on the pin bore and the risk of the crack on the pin bore is increased.

On the other hand, to improve the heat resisting, the piston is manufactured by the casting of aluminum silicon alloy. But the aluminum silicon alloy has a tendency that the first phase silicon crystal grows largely. Therefore, when the cast alloy is directly forged or machined, cracks are formed on the boundary surface between the first phase silicon crystal and the aluminum matrix, resulting in the decrease of the mechanical strength. Specially, in the piston, the cracks easily occur on the pin bore.

Still further, according to the minimizing the dimension of the piston and the output enhancing of the engine, the area of the inner surface of the pin bore receiving the piston pin becomes restricted relative to the load of the cylinder, and hence the surface pressure of the pin bore where it contacts with the peripheral surface of the piston pin increases, and the surface damage becomes easily occurred. On the other hand, for the relaxation of the stress at the edge of the combustion chamber, the piston peripheral sides of the pin boss is tried to form taper configurations. But this arrangement still further increase the surface pressure at the starting point of the taper configuration. Accordingly the surface damage of the pin bore by the piston pin is more enhanced.

In the Japanese utility model opening S61-53541, toward piston center side direction, multi steps tapers are formed on the inner surface of the pin bore formed through the pin boss for averaging the concentration of the stress due to the combustion of the engine. By this device, as the area of the straight portion becomes small and the surface pressure becomes large, the surface damages between the piston pin and the pin bore become enhanced.

Another method to reinforce the pin bore of the piston is the insertion of the bush which is made from the high strength alloy materials, for example copper aluminum alloy, and is prepared separately. But the reinforcement by the bush brings the cost up of the piston.
PRIOR PATENT REFERENCE; Japanese utility model opening S61-53541

### DISCLOSURE OF THE INVENTION

### PROBLEM SOLVED BY THE INVENTION

The object of the present invention is to provide a piston for internal combustion engine, in which the piston is prevented from the cracks and the surface damages by the increase of the surface pressure due to the enhancement of the load by power up of the engine and the decrease of dimension of the piston by the minimize of the engine.

The another object of this invention is to provide a piston for internal combustion engine, in which the lubrication oil membranes does not collapse between the piston pin and the pin bore, and preferable lubrication is accomplished by reserving the sufficient amount of lubrication oil.

A still further object of this invention is to provide a piston for internal combustion engine, in which the pin bore is prevented from concentration of the stress at the piston center side portion and the piston peripheral portion of the pin bore, and crack of the pin bore due to the stress is also prevented.

A still further object of this invention is to provide a method for manufacturing a piston for internal combustion engine easily and by low cost, in which the piston is prevented from the surface damage between the piston pin and the pin bore.

The above object and the other objects of this invention will be apparent from the technical spirits of this invention and the embodiments described hereinafter.

### MEANS TO SOLVE THE OBJECTS

The main invention relates to a piston provided with pin bosses through which pin bores are formed for receiving the piston pin,
wherein the piston is cast from aluminum silicon alloy,
at least the piston center side portion of the pin bore is formed from the taper hole, the piston center side being larger,
recesses are formed on the inner surface of the pin bore by the dimple process, the recesses being a lubrication oil reservoir,
and a minimized layer is formed on the inner surface of the pin bore by minimizing the first phase silicon crystal in the piston matrix, by said dimple process.

In the above mentioned piston, the piston center side portion of said pin bore may be a taper hole, the center side portion being larger,
the piston peripheral side portion of said pin bore may be a taper hole, the peripheral side portion being larger,
and the intermediate portion of said pin bore may be a straight hole.

Further, the taper angle of said taper hole may be less than 20 minutes. Still further, said taper hole may comprise from plural taper holes, the taper angle of which may be different from each other, and the plural taper holes may be steppingly combined. Still further, said dimple process may be performed by ejecting spherical particles on the inner surface of said pin bore. Still further, the first phase silicon crystal in the piston matrix existing in the inner surface of said pin bore and in the neighborhood may be minimized by the ejection of the spherical particle and the minimized layer may be formed. Still further, the ring engaging groove and its neighborhood may be covered by a mask, and the ejection of the spherical particles may be prevented.

The other main invention relates to a piston provided with pin bosses through which pin bores are formed for receiving the piston pin,
wherein the piston is cast from aluminum silicon alloy,
a release portion is formed for releasing the piston pin at least at the piston top side portion and the piston center side portion of said pin bore in where high pressure is applied by the deformation of the piston pin,
recesses are formed on the inner surface of the pin bore by the dimple process, the recesses being a lubrication oil reservoir,
and a minimized layer is formed on the inner surface of the pin bore by minimizing the first phase silicon crystal in the piston matrix, by said dimple process.

In the above mentioned piston, said dimple process may be performed by ejecting spherical particles on the inner surface of said pin bore. Further, the ring engaging groove and its neighborhood may be prevented from said dimple process.

The main invention of working method relates to a method for forming a pin bore on a piston of the internal combustion engine, the piston being connected with connecting rod through a piston pin, and being provided with pin bosses through which pin bore are formed for receiving the piston pin,
wherein the piston is cast from aluminum silicon alloy,
at least the piston center side portion of the pin bore is formed from the taper hole, the piston center side being large,
dimple process is applied on the inner surface of the pin bore, the recesses by the dimple process being a lubrication oil reservoir,
further the first phase silicon crystal in the piston matrix is minimized by the dimple process for forming the minimized layer on the inner surface of the pin bore.

In above mentioned method, the ring engaging groove and its neighborhood may be prevented from said dimple process by a mask means directly installed thereon. Further, the ring engaging groove and its neighborhood may be prevented from said dimple process by a shield member having small openings smaller than the pin bore, through said openings the spherical particles being ejected in the oblique direction.

The other main invention of working method relates to a method for forming a pin bore on a piston of the internal combustion engine, the piston being connected with connecting rod through a piston pin, and being provided with pin bosses through which pin bore are formed for receiving the piston pin,
wherein the piston is cast from aluminum silicon alloy,
a release portion is formed for releasing the piston pin at least at the piston top side portion and the piston center side portion of said pin bore in where high pressure is applied by the deformation of the piston pin,
dimple process is applied on the inner surface of the pin bore, and the first phase silicon crystal in the piston matrix is minimized by the dimple process for forming the minimized layer on the inner surface of the pin bore.

In above mentioned method, the ring engaging groove and its neighborhood may be prevented from said dimple process by a mask means directly installed thereon. Further, the ring engaging groove and its neighborhood may be prevented from said dimple process by a shield member having small openings smaller than the pin bore, through said openings the spherical particles being ejected in the oblique direction.

### EFFECT OF THE INVENTION

According to one aspect of this invention, there is provided a piston for the internal combustion engine,
wherein the piston is cast from aluminum silicon alley, at least the piston center side portion of the pin bore is formed from the taper hole and the piston center side is larger, or alternatively, release portion is formed on the pin bore, dimple process is applied on the inner surface of the pin bore, recesses by the dimple process being a lubrication oil reservoir, and further the first phase silicon crystal in the piston matrix is minimized by the dimple process for forming the minimized layer on the inner surface of the pin bore.

Accordingly, by this arrangement, as the pin bore is formed from the taper hole, or is provided with the release portion, the partial concentration of the stress due to the deformation of the piston pin by the combustion pressure is prevented, and the pressure resistance of the inner surface of the pin bore is improved. Further, the lubrication oil is surely reserved in the reservoir of the recesses formed by the dimple process, and the lubrication badness between the piston pin and the pin bore is prevented. Therefore the surface damage is prevented. Still more due to the minimized layer by the minimization of the first phase silicon crystal through the dimple process, the inner surface of the pin bore is reinforced. Accordingly, the preferable connecting mechanism and good lubrication between the piston pin and the pin bore are accomplished, under the tendency to decrease the area of the inner surface of the pin bore due to the enhancement of the output power and the minimization of the internal combustion engine.

### BRIEF DESCRIPTION OF THE DRAWINGS

Fig. 1 is a perspective view of a piston according to one embodiment of this invention.
Fig. 2 is a longitudinal cross section of the piston of this embodiment.
Fig. 3 is a longitudinal cross section along the axis of the pin bore of the piston of this embodiment.
Fig. 4 is an enlarged longitudinal cross section of the pin bore of the piston.
Fig. 5 is a cross section of the pin boss of the piston and an explanation diagram explaining the sampling position of the roughness of the surface of the pin bore on which the dimple process is applied.
Fig. 6 is an enlarged cross section of the inner surface of the pin bore.
Fig. 7 is a photographic view by SEM showing the inner surface of the pin bore.
Fig. 8 is an histology view of the cross section of the pin bore on which the dimple process is applied.
Fig. 9 is a graph showing the result of the improvement of the strength of the pin bore.
Fig. 10 is a graph showing the result of the improvement of the durability test of the pin bore.
Fig. 11 is a longitudinal cross section of a supporting apparatus for piston to apply the dimple process on the pin bore.
Fig. 12 is a flow diagram showing the process of the pin bore in order.
Fig. 13 is a longitudinal cross section of a piston according to another embodiment.
Fig 14 is a cross section along the center axes of the pin bore of the piston of another embodiment.

### DESCRIPTION OF THE REFERENCE NUMERALS

- 10: combustion chamber
- 11∼13: grooves for rings
- 14: cooling bore
- 18: pin boss
- 20: pin bore
- 21: piston pin
- 22: connecting rod
- 24: ring engaging groove
- 26: straight portion
- 27: piston center side taper portion
- 28: piston peripheral side taper portion
- 32: mask
- 33: recess (worked surface by dimple process)
- 34: minimized layer
- 36: index table
- 37: support base
- 38: projected holder
- 41: shield member
- 42: opening
- 45: ejection arm
- 46: ejection nozzle
- 47: air ejection nozzle
- 52: release portion

### BEST MODE OF THE INVENTION

Now below, the present invention will be described with the accompanying drawn embodiments.

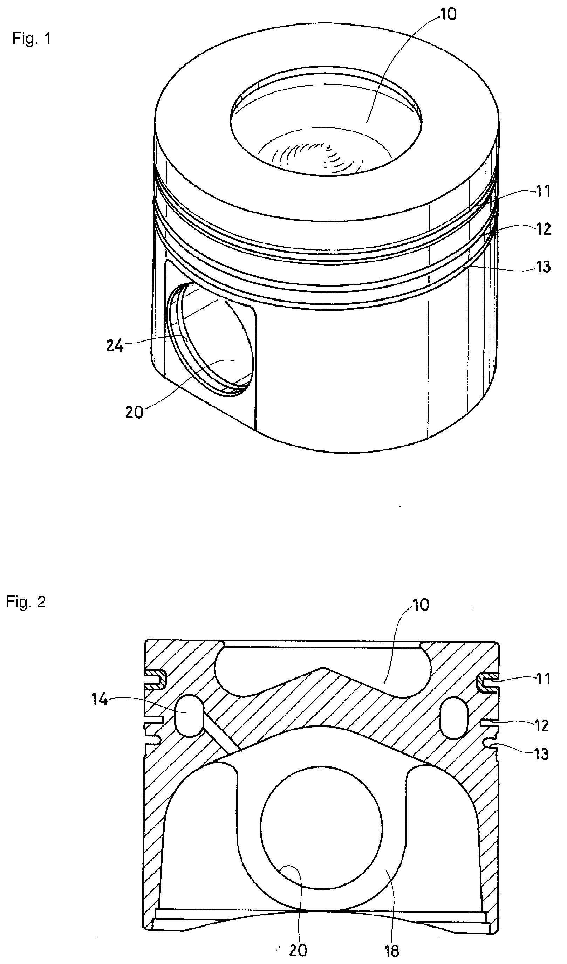

Fig 1 to Fig. 3 show the hole structure of the piston according to the first embodiment of this invention. This piston is a cast piston by the aluminum silicon alloy containing 10-20 weight percent of silicon, and is directed for the direct injection Diesel engine. The piston has a flat top surface, and at the center of the flat top surface, a concavity is defined forming a combustion chamber 10. On the outer periphery surface, three grooves 11, 12, 13 for rings are formed, from the top side to the downward. The piston rings and an oil ring are installed on these grooves. Further, as shown in Fig.2, a cooling bore 14 is formed at the inside of the piston and at the inside of the ring grooves 11, 12, 13 and obliquely under the combustion chamber 10 extending circular direction in the piston. Cooling oil is injected from the lower side and circulates in the cooling bore 14 to prevent the rising of the temperature on operation.

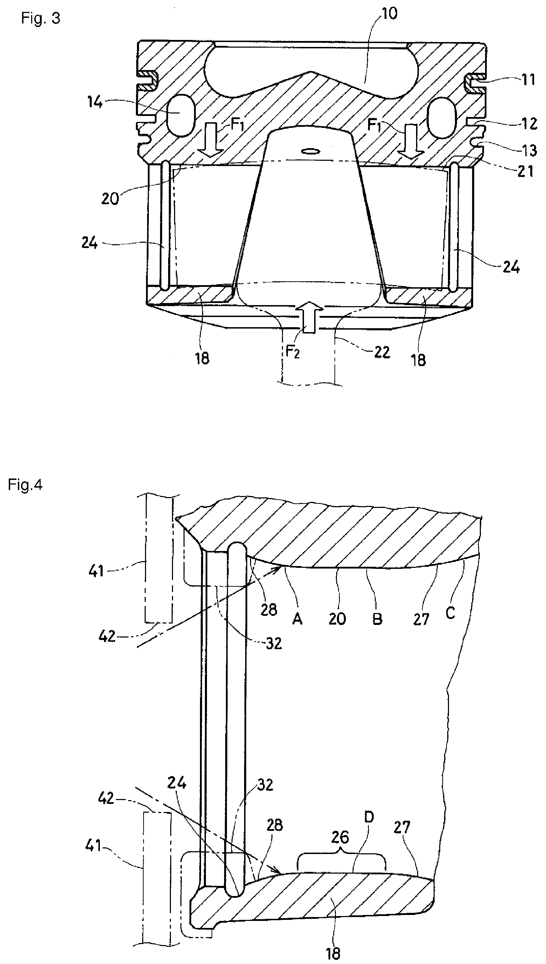

Next, the structure to connect the piston with the connecting rod will be described. A pair of pin bosses 18 are formed at the underside of the piston so that the axis of the pin boss 18 meets at right angle with the longitudinal axis of the piston. Through the center of the pin boss 18, pin bore 20 is defined. A piston pin 21 is fitted with the pin bore 20 as shown in chain-dot line in Fig.3. The piston pin 21 serves to connect the piston with the connecting rod 22. To prevent the dropping out of the piston pin 21 inserted into the pin bore 20, ring engaging grooves 24 are formed, and engaging rings are installed on the ring engaging grooves 24. The piston pin 21 is prevented from the axial movement by means of the engaging rings.

Next, a composition of the inner surface of the pin bore 20 through which the piston pin 21 is inserted will be described with Fig. 4. The intermediate portion in the axial direction of the pin bore 20 is comprised of a straight portion 26. The piston center side portion of the pin bore 20 is comprised of a taper portion 27. The piston peripheral side portion of the pin bore 20 is comprised of a taper portion 28. Further the taper 27 of the piston center side portion is comprised of a shape, in which three taper portions are composed steppingly. Still more, the piston peripheral side portion of the pin bore 20 is comprised of a shape, in which three taper portions are composed stepped. In general, the angle of the taper portion is less than 20 minutes, and the plural taper portions are preferable to change the angles steppingly in order to continue with the straight portion in which the taper angle is 0.

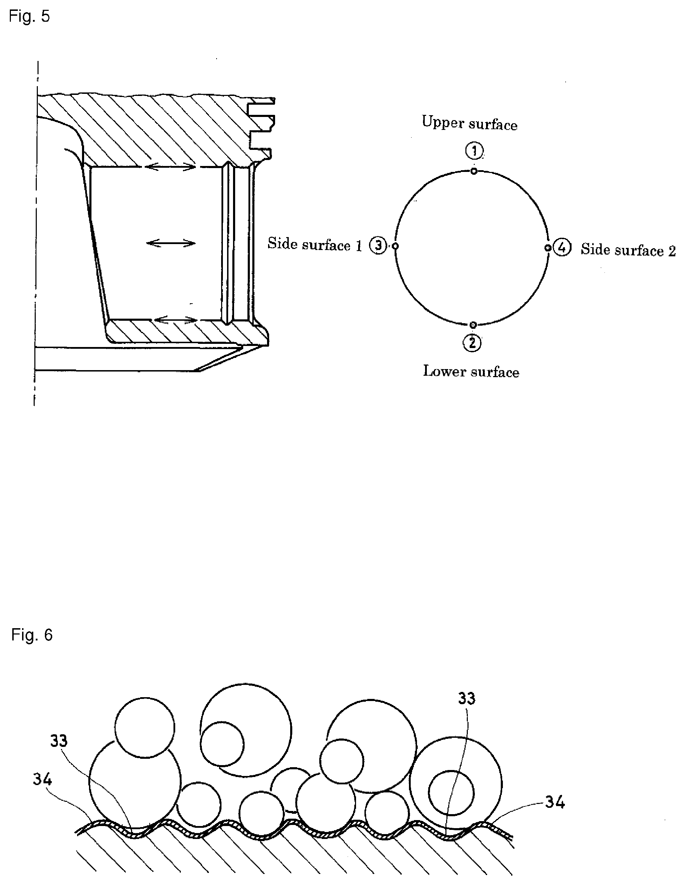

Further, in the inner surface of the pin bore 20, as shown in Fig. 6, are formed the recesses 33 by the dimple process, and the minimized layer 34 by the minimizing the first phase silicon crystal through the dimple process. The recesses 33 are formed directly by the micro peening process, which will be described hereinafter. The minimized layer 33 is formed along the inside surface of the pin bore 20 by physically minimizing the first phase silicon crystal which makes piston alloy with aluminum, through the ejection of the sphere shots. Still further, as shown in Fig. 4, the piston peripheral side and of the pin bore 20 is not applied with the dimple process. That is, the piston peripheral side of the inner surface of the pin bore 20 is previously covered with mask 32 which is made of polyurethane, hard rubber, or POM resin. When the pin bore 20 with the above mask is applied with the ejection, numerous numbers of the recesses 33 are formed on the inner surface of the pin bore 20 by the dimple process, except of the region mask is covered. The recesses 33 shown in Fig. 6 serves as a lubrication oil reservoir for storing the lubrication oil which accomplishes a good lubrication between the piston pin 21 and the pin bore 20. As the ring engaging groove 24 is covered by mask 32 and the groove 24 is not applied with the ejection of the sphere shots, the edge of the groove 24 is not collapsed by the sphere shot ejection.

In this embodiment, the micro peening process will be applied by the following conditions.

Ejection angle of the sphere shot: 20-60 degree (angle relative to the surface of the pin bore 20).
Ejection pressure: 0.20-1.0 MPa
Ejection substance: sphere particle (diameter of the center 20-200 µm)
Ejection time duration: 5-40 sec
Mean roughness of the inner surface of the pin bore 20: Ra 0.5∼5.0µm

In a micro peening process utilizing the same size sphere particles, the surface roughness of the pin bore 20 changes as shown in Table 1, when the ejection pressure is increased or decreased. In the Table 1, the upper surface, the lower surface, and two side surfaces correspond to the respective positions in Fig. 5. When the ejection pressure is increased, the effect of the dimple process is expectant. But the range of the surface roughness becomes high and the fitness clearance is dispersed when the pressure is increased. On the contrary, when the pressure is decreased, surface roughness is stable on all surface, and the change of the roughness is stable on all surface. But the change of the roughness relative to that dimple process is not applied become very small which brings no effect of the dimple process. The selection of the ejection substance and the regulation of the ejection pressure should suitably be established so that the fitness clearance of the pin bore is under guarantee and the surface roughness is uniform all over the inner surface of the bore. When the sphere particle having 20∼200µm center diameter is used, the ejection pressure is 0.20-1.0 MPa. When the pressure is larger than the above value, the range of the roughness (Rₐ) becomes large and the fitness clearance between the piston pin and the pin bore is dispersed. On the contrary when the pressure is less than the above value, the effect of the process is not appear.

**TABLE 1**

| | Roughness of pin bore surface | | | | |
|---|---|---|---|---|---|
| | relative to the ejection pressure | | | | |
| | | ① Upper surface | ② Lower surface | ③ Side surface 1 | ④ Side surface 2 |
| Ejection pressure | Ra | 2.5 | 2.0 | 2.0 | 2.8 |
| High | Rmax | 14.4 | 11.8 | 12.0 | 16.3 |
| Ejection pressure | Ra | 1.0 | 0.9 | 0.9 | 1.0 |
| Medium | Rmax | 6.6 | 5.9 | 6.1 | 6.6 |
| Ejection pressure | Ra | 0.5 | 0.5 | 0.5 | 0.5 |
| Low | Rmax | 3.6 | 3.1 | 3.6 | 3.5 |
| | | | | | |
| | | | Roughness standard: JIS1982 | | |
| | | | Ra: mean roughness on axis | | |
| | | | Rmax: maximum height | | |

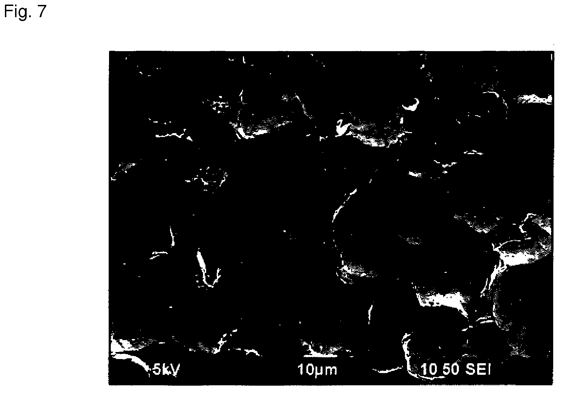

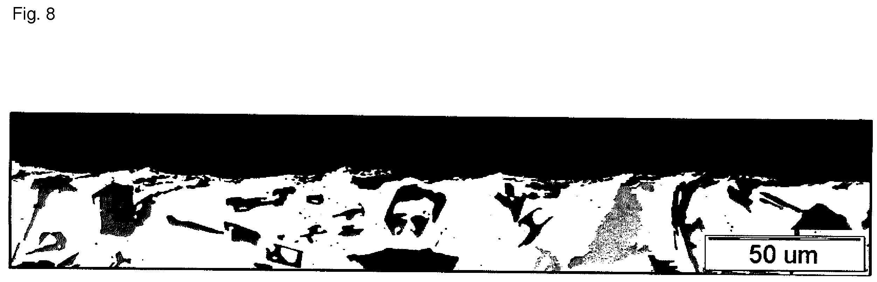

Fig. 6 is a drawing in which the micro peening process is applied on the inner surface of the pin bore 20 of the piston. A numerous number of lubrication oil reservoirs by the numerous recesses 33 are formed on the inner surface of the pin bore and the lubrication is improved. Further, the first phase silicon crystal in the piston matrix is minimized by the above mentioned micro peening process and the minimized layer 34 is formed. The minimized layer 34 is formed physically, and the thickness of the layer is 10-50 µm. Fig. 7 shows a photographic view by SEM of the inner surface of the pin bore. Fig. 8 shows an histology view of the cross section of the pin bore.

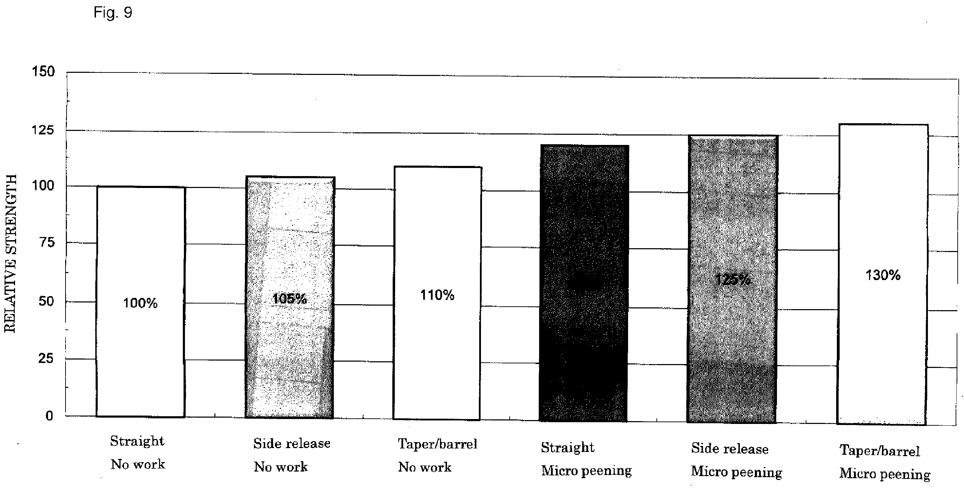

Fig. 9 shows an increment of the strength of the pin bore 20 by the combination of the above mentioned micro peening process and the profile of the pin bore 20. When the strength of the pin boss with no treatment and the straight profile is assumed as 100 %, the strength of the profile of side release by the second embodiment which will be described after is 105%. Further the profile of the pin bore is formed as taper or barrel, the strength becomes 110%. On the contrary, when the micro peening process is applied on the straight profile pin bore, the strength becomes 120%. Further, in the case of the combination of the side release profile (Second embodiment) and the micro peening, the strength becomes 125%. Further, the micro peening process is applied on the pin bore of the taper profile or the barrel profile, the strength becomes 130%. Thus the strength is improved with 30%. By these resultants, the strength with the straight profile and the ejection process is higher than the strength with the side release profile, taper profile, or the barrel profile. Further, when the micro peening process is applied on the taper profile or the barrel profile, the strength is still more improved and the piston may be used instead of the bush inserted piston.

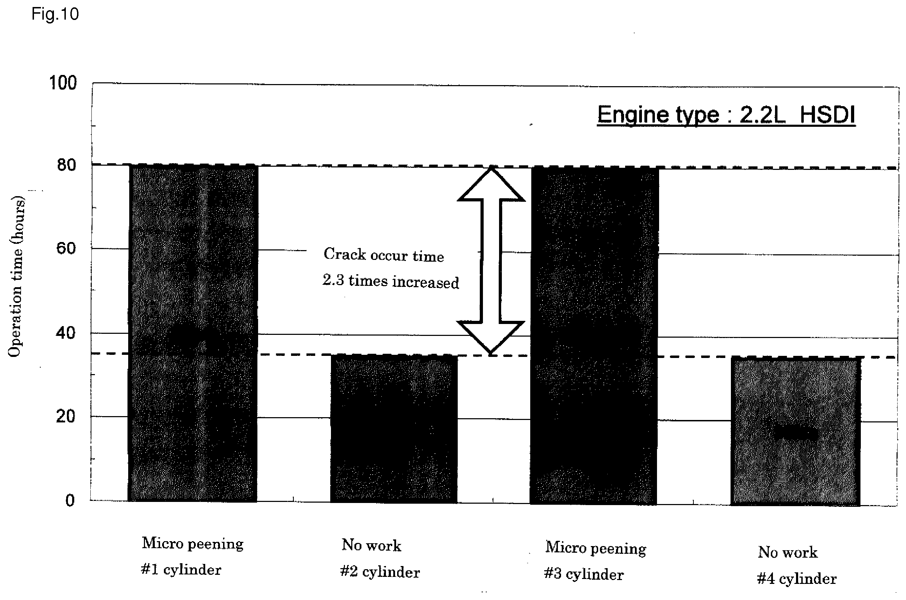

Fig. 10 shows a result of an endurance test through the experiment. In this experiment, the pistons with micro peening process applied are inserted into the first and third cylinders of the four cylinder engine, and the no process pistons are inserted into the second and fourth cylinders. The experiment is under the severe condition by reducing the area of the contact between the upper side of the pin bore and the piston pin, or by increasing the pressure in the cylinder on combustion. These conditions will easily result cracks on the pin bore. According to this experiment, as shown in Fig. 10, the time duration to cause cracks is extended more than two times when micro peening process is applied.

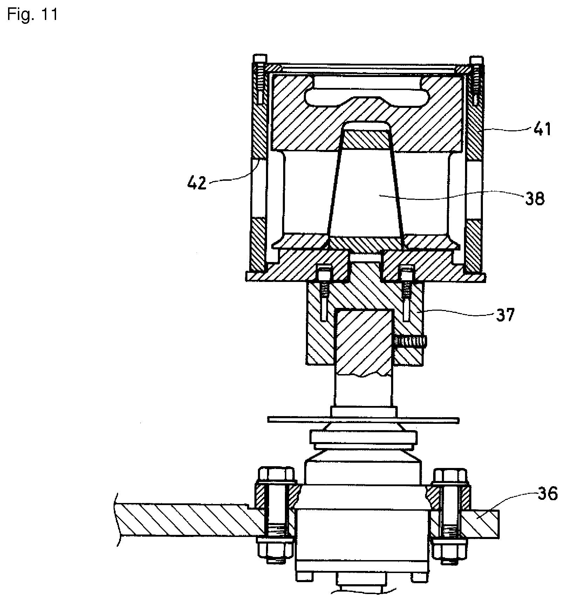

Fig. 11 shows an installation of a piston in a micro peening apparatus by which the above mentioned lubrication recesses are formed. The apparatus is provided with an index table 36. Six holding seats for pistons are arranged along the circular direction by 60 degrees. In every holding seats, install stand 37 is equipped, and the piston is held in respective projection 38 of the holding seat 37. The shape of the projection 38 is similar to the connecting rod 22, and the piston is held on the install stand 37 by inserting the projection 38 between the both sides pin bosses 18. A shield member 41 having a top and bottom reverse shape cup is installed from the top side. A pair of circular openings 42 are formed on the opposite lateral walls of the shield member 41. The dimple process area in the inner surface of the pin bore is determined by the dimension of the opening 42, the ejection angle by the ejection nozzle 46, and the relative position between the opening 42 and the nozzle 46.

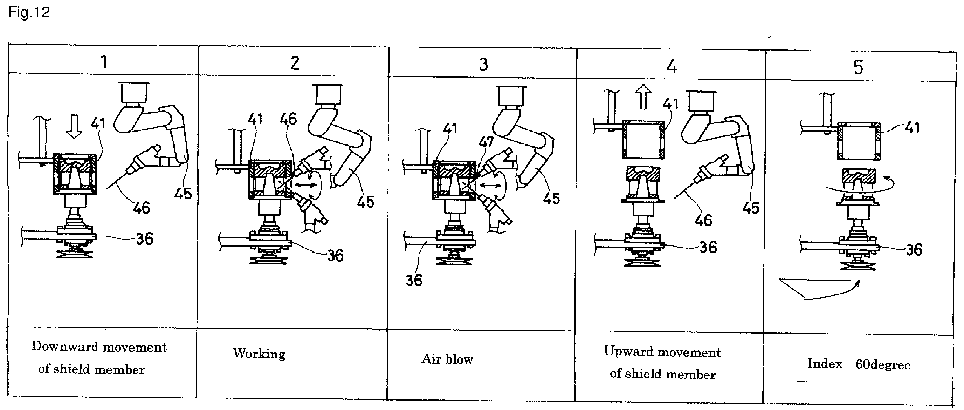

Fig. 12 shows a series of micro peening process for application of dimple working. In the step 1, the shield member 41 moves downward from the upper side and covers the corresponding piston which is held in the supporting base 37. In the step 2, the ejection nozzle 46 supported at the top of the ejection arm 45 ejects the spherical particles obliquely by 30 degrees, and the ejection process is applied on the inner surface of the pin bore 20 of the piston. In this process, by the opening 42 of the shield member 41, the piston peripheral area is prevented from work and the minimized particles are not ejected on the ring engaging groove 24. Accordingly, by the shield member 41, the working area of the dimple process can be determined without covering mask 32.

When the micro peening process is terminated, as shown in step 3, an air ejecting gun moves downward, and the gun blows off and removes the minimized particles left on the inner surface of the pin bore 20. Hereafter, in step 4, the shield member 41 moves upward. Further, in step 5, the index table 36 rotates by the angle of 60 degrees, and the work will be applied on the next piston.

As mentioned above, according to the piston of the present embodiment, taper portions 27, 28 are formed on the piston center side and the piston peripheral side respectively. Further numerous recesses 33 are formed on the inner surface of the pin bore 20 in the area except for the piston peripheral side in where the ring engaging grooves are provided, and the recesses consistant the lubrication oil reservoir. Still further minimized layer 34 is formed by the minimization of the first phase silicon crystals. Accordingly, the damage of the pin bore 20 due to the partial stress concentration is prevented, and the preferable lubrication between the piston pin 21 and the pin bore 20 is accomplished.

The piston shown in Fig. 3 receives downward combustion pressure by the top surface when the combustion occurs in the cylinder. The force F₁ due to the combustion pressure pushes the both end of the piston pin 21 downward through the respective pin boss 18. As the central portion relative to axial direction of the piston pin 21 is supported by the connecting rod 22, the connecting rod 22 causes repel force F₂. Therefore, the piston pin 21 bend so that the both end sides shift downward and the central portion shifts upward. According to the deformation of the piston pin 21, on the piston center side of the pin bore 20, upper side surface portion receives high compression stress, and on the piston peripheral side of the pin bore 20, lower side surface portion receives high compression stress. This phenomenon of the stress applied on the piston pin 21 and the pin bore 20 is similar when the piston rises by the crank shaft to compress the intake air.

In the piston of this embodiment, the piston center side taper portion 27 and the piston peripheral side taper portion 28 mitigate the concentration of the stress due to the deformation of the piston pin 21, and prevent the destruction of the pin boss 18 through which the pin bore 20 is formed. The advantage to prevent the destruction brings more large merit when the output power of the internal combustion engine is enhanced and the dimension of the engine is minimized.

When the engine is minimized, the area of the inner surface of the pin bore 20 decrease, and when the output of the engine is enhanced, the pressure by the piston pin 21 against the inner surface of the pin bore 20 increase. These phenomena brings the badness of the lubrication. In the present invention, the badness of the lubrication is solved by the lubrication oil reserved by the recesses 33 formed by the dimple process. Therefore, when the mean surface pressure of the inner surface of the pin bore 20, specially the straight portion 26 raises, the surface damage is prevented by the lubrication oil reserved by the reservoir formed by the dimple process. Accordingly, the surface damage between the piston pin 21 and the pin bore 20 of the small size and enhanced engine is effectively solved.

The formation of the recesses 33 by the dimple process on the pin bore 20 causes a residual stress on the inner surface of the pin bore 20 and the surface hardness is increased. Therefore, the strength of the pin bore 20 itself is enhanced. Further, by the dimple process, the first phase silicon crystal in the piston matrix existing along the inner surface of the pin bore 20 is minimized, and the minimized layer 34 is formed near the inner surface of the pin bore 20. Thus, the minimization of the first phase silicon crystal disposed on the work surface of the aluminum alloy piston constitutes the enhancement of the strength of the pin bore 20. Accordingly, by the minimization of the first phase silicon crystal, the strength of the inner surface of the pin bore 20 is enhanced. Thus, the crack on the pin bore 20 is prevented. The prevention of the crack by the present embodiment is more cheap than the reinforcing bush which is fitted on the pin bore.

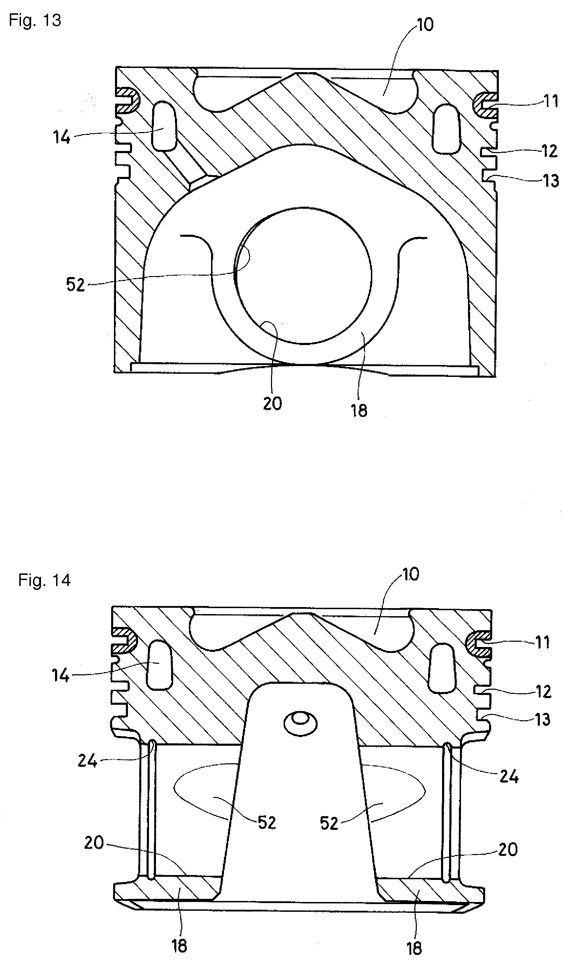

Next, another embodiment will be described with Fig. 13 and Fig. 14. In this embodiment, release portions 52 are formed on the piston center side portion of the pin bore 20, instead of the taper portions 27, 28 of the piston center side and the piston peripheral side. That is, as shown in Fig. 3, on the ordinal operation, the piston pin 21 bends so that the center side deform upward and the both end sides deform downward resulting in the arch shaped configuration. At the same time, when the piston pin 21 is hollow, the piston pin 21 deforms flat and urges on the pin bore 20 a large pressure partially. Therefore, by forming the release portions 52 on a position of the pin bore 20 where the piston pin 21 contacts and urges large pressure by the deformation thereof, the pin bore 20 is not pushed and not received the compressive stress partially by the flat piston pin 21, and the surface damage is also prevented. Accordingly, the release portion 52 is formed on the position where the partial stress is applied by the above piston 21, and the stress is relieved by the release portion 52. Further, in this embodiment, the dimple work surface is formed on the inner surface excepting the area near the ring engaging groove 24 as shown Fig.6. In the dimple work surface, a numerous numbers of the recesses 33 are formed and the recesses 33 constitute a reservoir which receives the lubrication oil. Further, the inner surface of the pin bore 20 is reinforced by the layer consisting of the minimized layer 34 of the first phase silicon crystal. Namely, in this embodiment, the taper portions 27, 28 are replaced by the release portions 52. The other compositions of this embodiment are same as that of the above mentioned first embodiment. Further, on the device to prevent the dimple process on the inner surface and near the ring engaging groove 24, the direct mask 32 (Fig. 4) or the opening 42 of the shield member 41 (Fig. 11) is applied.

Although the present invention is described by the embodiments with the accompanying drawings, the present invention is not limited to the above embodiments, and various variation can be included within the scope of the technical spirit of this invention. For example, the configuration of the pin bore 20, the dimension and the number of the recess 33 formed on the inner surface of the pin bore 20 by the dimple process in accordance with the output power of the internal combustion engine used.

### THE INDUSTIAL UTILIZATION OF THE INVENTION

This invention can be utilized as a piston of the internal combustion engine, specially the direct injection type Diesel engine.

## Claims

1. A piston provided with pin bosses through which pin bores are formed for receiving the piston pin,
wherein the piston is cast from aluminum silicon alloy,
at least the piston center side portion of the pin bore is formed from the taper hole, the piston center side being larger,
recesses are formed on the inner surface of the pin bore by the dimple process, the recesses being a lubrication oil reservoir,
and a minimized layer is formed on the inner surface of the pin bore by minimizing the first phase silicon crystal in the piston matrix, by said dimple process.

2. A piston according to claim 1,
wherein the piston center side portion of said pin bore is a taper hole, the center side portion being larger,
the piston peripheral side portion of said pin bore is a taper hole, the peripheral side portion being larger,
and the intermediate portion of said pin bore is a straight hole.

3. A piston according to claim 1 or claim 2, wherein the taper angle of said taper hole is less than 20 minutes.

4. A piston according to claim 1 or claim 2, wherein said taper hole comprises from plural taper holes, the taper angle of which are different from each other, and the plural taper holes are steppingly combined.

5. A piston according to claim 1, wherein said dimple process is performed by ejecting spherical particles on the inner surface of said pin bore.

6. A piston according to claim 5, wherein the first phase silicon crystal in the piston matrix existing in the inner surface of said pin bore and in the neighborhood is minimized by the ejection of the spherical particles and the minimized layer is formed.

7. A piston according to claim 3 or claim 4, wherein the ring engaging groove and its neighborhood are covered by a mask, and the ejection of the spherical particles is prevented.

8. A piston provided with pin bosses through which pin bores are formed for receiving the piston pin,
wherein the piston is cast from aluminum silicon alloy,
a release portion is formed for releasing the piston pin at least at the piston top side portion and the piston center side portion of said pin bore in where high pressure is applied by the deformation of the piston pin,
recesses are formed on the inner surface of the pin bore by the dimple process, the recesses being a lubrication oil reservoir,
and a minimized layer is formed on the inner surface of the pin bore by minimizing the first phase silicon crystal in the piston matrix, by said dimple process.

9. A piston according to claim 8, wherein said dimple process is performed by ejecting spherical particles on the inner surface of said pin bore.

10. A piston according to claim 8, wherein the ring engaging groove and its neighborhood are prevented from said dimple process.

11. A method for forming a pin bore on a piston of the internal combustion engine, the piston being connected with connecting rod through a piston pin, and being provided with pin bosses through which pin bore are formed for receiving the piston pin,
wherein the piston is cast from aluminum silicon alloy,
at least the piston center side portion of the pin bore is formed from the taper hole, the piston center side being large,
dimple process is applied on the inner surface of the pin bore, the recesses by the dimple process being a lubrication oil reservoir,
further the first phase silicon crystal in the piston matrix is minimized by the dimple process for forming the minimized layer on the inner surface of the pin bore.

12. A method according to claim 11, wherein the ring engaging groove and its neighborhood are prevented from said dimple process by a mask means directly installed thereon.

13. A method according to claim 11, wherein the ring engaging groove and its neighborhood are prevented from said dimple process by a shield member having small openings smaller than the pin bore, through said openings the spherical particles being ejected in the oblique direction.

14. A method for forming a pin bore on a piston of the internal combustion engine, the piston being connected with connecting rod through a piston pin, and being provided with pin bosses through which pin bore are formed for receiving the piston pin,
wherein the piston is cast from aluminum silicon alloy,
a release portion is formed for releasing the piston pin at least at the piston top side portion and the piston center side portion of said pin bore in where high pressure is applied by the deformation of the piston pin,
dimple process is applied on the inner surface of the pin bore, and the first phase silicon crystal in the piston matrix is minimized by the dimple process for forming the minimized layer on the inner surface of the pin bore.

15. A method according to claim 14, wherein the ring engaging groove and its neighborhood are prevented from said dimple process by a mask means directly installed thereon.

16. A method according to claim 14, wherein the ring engaging groove and its neighborhood are prevented from said dimple process by a shield member having small openings smaller than the pin bore, through said openings the spherical particles being ejected in the oblique direction.
